# EUROPEAN PATENT APPLICATION

(11) **EP 2 002 972 A2**
(43) Date of publication of application: **17.12.2008**
(21) Application number: 07720525.0
(22) Date of filing: 23.03.2007
(51) Int. Cl.: B32B 3/30, B32B 3/04, B32B 27/00, A47B 13/08, A47C 7/16

(54) **A PLASTIC COMPOSITE BOARD WITH ULTRASONIC WELDED STRUCTURE**

(30) Priority: 30.03.2006 CN 200610043467
(71) Applicant: Leng, Luhao, Xiamen, Fujian 361009 (CN)
(72) Inventor: Leng, Luhao, Xiamen, Fujian 361009 (CN)
(74) Representative: Stuttard, Garry Philip
(86) International application number: PCT/CN2007/000951
(87) International publication number: WO 2007/112660

(57) **Abstract**

A plastic composite board with ultrasonic welded structure comprises a plastic surface plate (11) and an injection molded piece (12). The plastic surface plate (11) is extruded directly or vacuum-molded after extrusion. The injection molded piece (12) can be formed by extruding directly or consisted of plural injection molded pieces. The plastic surface plate (11) and the injection molded piece (12) are welded together at the contact position by ultrasonic welding. Small protuberant points or stripes are arranged at the contact position between the injection molded piece (12) and the bottom surface of plastic surface plate (11), which can be melted to bind the plastic surface plate (11) and the injection molded piece (12) during ultrasonic welding. In the case that the higher structural strength is required, an internally embedded reinforcement can be placed between the injection molded piece (12) and the bottom surface of plastic surface plate (11)to enhance strength and decrease the amount of the injection molded piece (12) used. The plastic composite board can be applied to chair board, file cabinet, store cabinet, materiel shelf, wall decorative board, clothespress separator or the like.

## Description

### FIELD OF THE INVENTION

The present invention relates to a plastic composite board, more particularly to a plastic composite board with ultrasonic welded structure.

### BACKGROUND OF THE INVENTION

The plastic composite boards have the advantages such as conveniently-get materials, lower cost and easy to be manufactured, so they are applied to replace the natural wood gradually. One of these plastic composite boards is formed by vacuum-molded, although the vacuum-molded composite board has the characteristics of light weight, easy-cleaned, lower-cost and nice-looking, but usually honeycomb paperboard and inner lining must be placed between the top plate and the bottom plate of this board to enhance the strength, this cause the difficult of manufacturing and the cost can not be reduced, thus affect the competition of the products.

### SUMMARY OF THE INVENTION

The primary object of the present invention is to obviate the disadvantages and limitations of the prior art, the present invention provides a plastic composite board with ultrasonic welded structure. To joint the face board formed by being extruded directly or vacuum-molded after extrusion together with the injection molded piece by ultrasonic welded structure can make full use of the structure of extrusion, vacuum-molded and injection-molded, and make up the deficiency of each other, thus the plastic composite board has the advantages of lower cost, less material, easy manufactured, light weight, easy-automated processing technique, smooth and sleek face etc..

The above and other objects of the invention are achieved by providing a plastic composite board with ultrasonic welded structure comprises :

a plastic surface plate, which is a single-structure extruded directly or vacuum-molded after extrusion, and having top surface and bottom surface;

an injection-molded piece, which is one or plural single-structure extruded directly and having the corresponding structure to the plastic surface plate, small protuberant points or stripes are arranged at the contact position between the injection molded piece and the bottom surface of plastic surface plate, which can be melted to bind the plastic surface plate and the injection molded piece during ultrasonic welding.

The periphery of the plastic surface plate is connected with the corresponding periphery of the injection molded piece, the bottom surface of the plastic surface plate bond with the corresponding protuberant points or stripes of the injection molded piece by ultrasonic welding.

The said injection molded piece is a single structure extruded directly, the injection molded piece attached on the full area of the bottom surface of the plastic surface board or only part area of the bottom surface of the plastic surface board.

The said injection molded piece is consisted of plural single structures of injection molded after extrusion, the injection molded piece attached on the full area of the bottom surface of the plastic surface board or only part area of the bottom surface of the plastic surface board.

Some ribs with some emboss formed by injection-molding arranged on the upper portion of the said injection molded piece, small protuberant points or stripes are arranged at the contact position between the top surface of the stripes and the bottom surface of plastic surface plate, which can be melted to bind the plastic surface plate and the injection molded piece during ultrasonic welding.

There are internally embedded reinforcements placed between the said plastic surface plate and the injection molded piece.

The said plastic surface plate is single-structure or plural-structure vacuum molded or extruded directly.

The top surface of the said plastic surface plate is a plane surface or curved surface.

The top surface of the said plastic surface plate has printing textures or printing patterns.

The top surface of the said plastic surface plate has composite film layer containing textures or patterns.

The top surface of the said plastic surface plate has textures or patterns generated by transfer films, and there are heat curing or UV-curing materials sprayed on the textures or patterns.

The periphery superposition of the injection molded piece and the surface plate of the said plastic composite board jointed together by welding or glue.

The said internally embedded reinforcement comprises closed frame made by pipe fittings or profiles, or comprises U-shape frame and reinforcement embedded in the corners of the composite board.

The said internally embedded reinforcement is two separated frames or II-shape frames or H-shaped frames made by pipe fittings or profiles.

The said internally embedded reinforcement is separated hardware or pipe fittings.

The said reinforcement embedded in the corner is hardware or plastic parts.

The plastic composite board with ultrasonic welded structure of the present invention, the surface plate and the injection formed by extruding directly or vacuum-molded after extrusion are melded together by ultrasonic welding, to meet the requirement of the ultrasonic welding between the plastic surface plate and the injection plastic piece, small protuberant points or stripes must be arranged between the contact surface of the plastic surface plate and the injection plastic piece, the contact pointed between the surface of the plastic surface plate and the injection plastic piece welded together by overall welding or local welding via the small protuberant points and stripes. Ultrasonic welding is to induce the mechanical vibrations produced by the ultrasonic welding machine to the plastic surface plate and the injection plastic piece, the friction of the molecules of the plastic surface plate and the injection plastic piece will rise the temperature of the welding joint regions, when the temperature reach the melting point of the plastic, the small protuberant points or stripes of the injection plastic piece will be melted quickly in the contact region between the plastic surface plate and the injection plastic piece, and then adhere between the plastic surface plate and the injection plastic piece, when the vibration stopped, the plastic surface plate and the injection plastic piece will be cool-formed at the same time under certain pressure, then the plastic surface plate will be melted together with the injection plastic piece, thus achieve the object of the connection between the plastic surface plate and the injection plastic piece. Herein the injection plastic piece cooperated with the plastic surface plate can be formed by extruding directly or consisted of plural injection molded pieces; the injection molded piece attached on the full area of the bottom surface of the plastic surface board or only part area of the bottom surface of the plastic surface board. The same material and different manufacturing characters of the structure of the composite board can make full use of the structure of extrusion, vacuum-molded and injection-molded, and make up the deficiency of each other.

The plastic composite board with ultrasonic welded structure of the present invention, in the case that the higher structural strength is required, internally embedded reinforcement can be placed between the injection molded piece and the plastic surface plate to enhance strength and decrease the amount of the injection molded piece used.

The plastic composite board with ultrasonic welded structure of the present invention, the plastic surface board is an extrusion plate and its shape and size of the surface can be made depending on the actual requirement, and unlike the injection plastic piece, it need not the expensive machine and mold to make, the molded surface is with good smooth, various colors, composite by plural layer, good surface hardness, easy to made thin walled large goods, and the surface without shrinkage, flow mark etc. existed in the injection molded piece. The said plastic surface plate is single-structure or plural-structure vacuum molded or extruded directly, and the thickness of the plastic plate is between 0.3mm to 4mm, i.e. use the material such as ABS, PP, PS to make a single layer or use PMMA+PS, PC+PS to make co-extruded multi-layer. By the using of the co-extrusion, it can improve the hardness, wearing resistance, weather resistance and widen the using field of the products without increasing too much cost. The top surface of the plastic surface plate can be formed to a plane surface, or to optional curved surface that the vacuum forming and the injection forming can achieve, thus to make the various shape of the products and widen the field of the product. The top surfaces of the plastic surface plate can has printing textures or printing patterns, or has composite film layer containing textures or patterns, e.g. the corresponding surfaces of the plastic surface plate can produce various nature colors such as wood grains or marbles by means of printing, they also can has composite film layer containing nature colors such as wood grains or marbles; the top surface of the plastic surface plates can also has textures or patterns produced by transfer films, e.g. the transfer films with natural colors such as various wood grains or marbles, after transferring, the film is removed, then spray heat curing or UV-curing materials to form a layer to add the rigidity and weatherability of the table surface.

The plastic composite board with ultrasonic welded structure of the present invention, the injection molded piece can be formed by extruding directly or consisted of plural injection molded pieces. The plural injection molded pieces can decrease the size of the pieces so that the cost of the machines and molds can be decrease; the injection pieces can have various forms and have high-precision, and internally embedded reinforcement of ribs can be used to enhance strength of the composite board after welding.

The plastic composite board with ultrasonic welded structure of the present invention, the upper portion of the injection molded piece can has ribs or has not ribs, if there are ribs, the small points or stripes usually arranges on the ribs.

The plastic composite board with ultrasonic welded structure of the present invention, the internally embedded reinforcement can be closed frame made by pipe fittings or profiles, and there are reinforcement in the corners to enhance strength of the corners and to connection; the internally embedded reinforcement can be U-shape frame made by pipe fittings or profiles and with reinforcement embedded in the corners; The internally embedded reinforcement can be two separated frames made by pipe fittings or profiles; or II-shape frames made by pipe fittings or profiles; or H-shaped frames made by pipe fittings or profiles; The internally embedded reinforcement can be separated hardware or pipe fittings to enhance strength of the corners and to connection. Herein the pipe fittings or profiles are formed to the needed figures by extrusion, drawing or mechanism manufacturing, and the said reinforcement embedded in the corner is hardware or plastic parts.

The present invention has advantages as follows: because the plastic surface plate and the injection plastic piece formed by extruding directly or vacuum-molded after extrusion welded together by ultrasonic welded structure, Some emboss ribs formed by injection molding arranged on the upper portion of the said injection molded piece, small protuberant points or stripes are arranged at the contact position between the top of the stripes and the bottom surface of plastic surface plate, which can be melted to bind the plastic surface plate and the injection molded piece during ultrasonic welding; The same material and different manufacturing characters of the structure of the composite board can make full use of the structures of extrusion, vacuum-molded and injection-molded, and make up the deficiency of each other. Thus the plastic composite board has the advantages of lower cost, less material, easy manufactured, light weight, easy-automated processing technique, smooth and sleek face etc. The plastic composite board can be applied to chair board, file cabinet, store cabinet, materiel shelf, wall decorative board, clothespress separator or the like.

### BFIEF DESCRIPTION OF THE DRAWINGS

Preferred embodiment of the present invention will be described in detail with reference to the drawings and examples; Understanding that these drawings depict only typical embodiments of the invention and are not therefore to be considered to be limiting of its scope.

FIG. 1 is a sectional view of the present invention used in chair in embodiment 1;

FIG. 2 is a partial enlargement view of A of FIG 1;

FIG. 3 is an exploded view of FIG 2;

FIG. 4 is a sectional view of the present invention used as chair board in embodiment 1;

FIG. 5 is a sectional view of the surface plate of chair board in embodiment 1;

FIG. 6 is a sectional view of the present invention used as chair back in embodiment 1;

FIG. 7 is a sectional view of the present invention used as chair back (top view) in embodiment 1;

FIG. 8 is a sectional view of the surface plate in embodiment 2 of the present invention;

FIG. 9 is another sectional view of the present invention used in chair in embodiment 3;

FIG. 10 is a sectional view of the present invention used as chair board in embodiment 3;

FIG. 11 is the first sectional view of embodiment 4 of the present invention;

FIG. 12 is the second sectional view of embodiment 4 of the present invention;

FIG. 13 is the first sectional view of embodiment 5 of the present invention;

FIG. 14 is the second sectional view of embodiment 5 of the present invention;

FIG. 15 is the first sectional view of embodiment 6 of the present invention;

FIG. 16 is the second sectional view of embodiment 6 of the present invention;

FIG. 17 is the first sectional view of embodiment 7 of the present invention;

FIG. 18 is the second sectional view of embodiment 7 of the present invention;

### DETAILED DESCRIPTION OF THE PREFFED EMBODIMENT

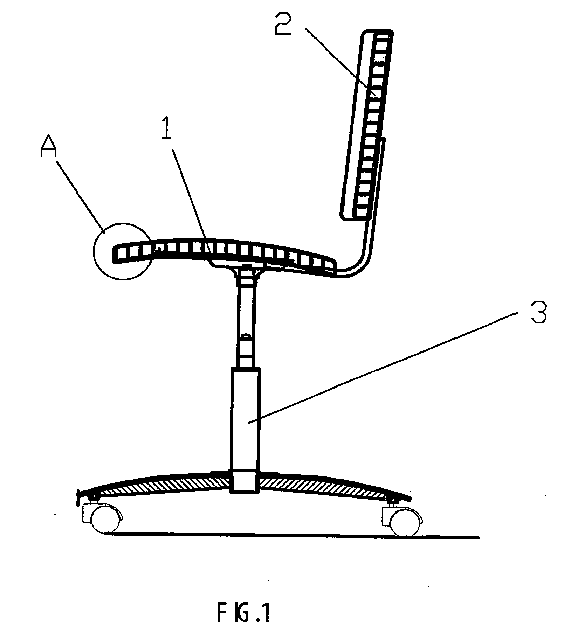

Embodiment 1. Referring to FIG.1 to FIG 7, The plastic composite board with ultrasonic welded structure of the present invention is used in the chair, FIG 1 is a sectional view of the chair, the chair comprises a bracket 3, chair board 1 and chair back 2 mounted on the bracket 3, both the chair board 1 and chair back 2 are plastic composite board with ultrasonic welded structure.

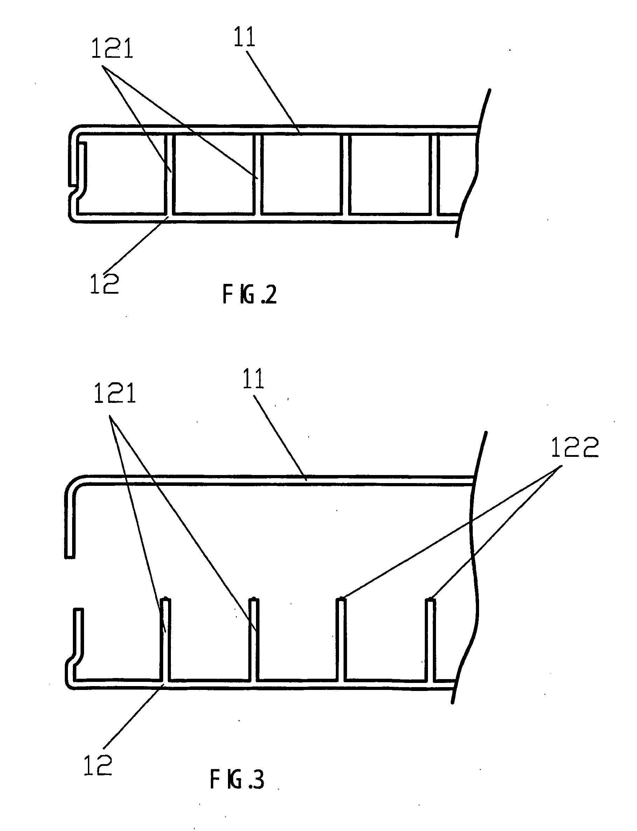

Referring to FIG 2 to FIG 5, the chair board 1 comprising:

An plastic surface plate 11, a single-structure extruded directly or vacuum-molded after extrusion, and having top surface and bottom surface;

An injection-molded piece 12, a single structure extruded directly and having the corresponding structure to the plastic surface plate, some emboss ribs 121 formed by injection molding arranged on the upper portion of the said injection molded piece, small stripes 122 are arranged at the contact position between the top surface of the ribs 121 and the bottom surface of plastic surface plate 11, which can be melted to bind the plastic surface plate 11 and the injection molded piece 12 during ultrasonic welding.

The periphery of the plastic surface plate 11 is connected with the corresponding periphery of the injection molded piece 12, the bottom surface of the plastic surface plate 11 bond with the corresponding stripes 122 of the injection molded piece by ultrasonic welding.

Herein the plastic surface plate 11 is a single structure extruded directly, certainly it can use the plural structure; the top surface of the plastic surface plate 11 is a plane surface; The top surface of the said plastic surface plate 11 has a film layer 111, the film layer 111 has printing textures or patterns on; the periphery superposition of the injection molded piece 12 and the surface plate of the said plastic composite board 11 jointed by welding or glue.

The chair board 1 of the present invention, the surface plate 11 and the injection plastic piece 12 formed by extruding directly or vacuum-molded after extrusion are melded together by ultrasonic welding, to meet the requirement of the ultrasonic welding between the plastic surface plate 11 and the injection plastic piece 12, small stripes 122 must be arranged between the contact surface of the plastic surface plate 11 and the injection plastic piece 12, the contact pointed between the surface of the plastic surface plate 11 and the injection plastic piece 12 welded together by overall welding or local welding via the small stripes 122. Ultrasonic welding is to induce the mechanical vibrations produced by the ultrasonic welding machine to the plastic surface plate 11 and the injection plastic piece 12, the friction of the molecules of the plastic surface plate and the injection plastic piece will rise the temperature of the welding joint regions, when the temperature reach the melting point of the plastic, the small stripes 122 of the injection plastic piece will be melted quickly in the contact region between the plastic surface plate 11 and the injection plastic piece 12, and then adhere between the plastic surface plate 11 and the injection plastic piece 12, when the vibration stopped, the plastic surface plate 11 and the injection plastic piece 12 will be cool-formed at the same time under certain pressure, then the plastic surface plate 11 will be melted together with the injection plastic piece 12, thus achieve the object of the connection between the plastic surface plate 11 and the injection plastic piece 12. Herein the injection plastic piece 12 cooperated with the plastic surface plate 11 can be formed by extruding directly or consisted of plural injection molded pieces; the injection molded piece 12 attached on the full area of the bottom surface of the plastic surface board 11 or only part area of the bottom surface of the plastic surface board 11. The same material and different manufacturing characters of the structures of the chair board 1 can make full use of the structures of extrusion, vacuum-molded and injection-molded, and make up the deficiency of each other.

The chair board 1 of the present invention, the plastic surface plate 11 is an extrusion plate and its shape and size of the surface can be made depending on the actual requirement, and unlike the injection plastic piece, it need not the expensive machine and mold, the molded surface is with good smooth, various colors, composite by plural layer, good surface hardness, easy to made thin walled large goods, and the surface without shrinkage, flow mark etc. existed in the injection molded piece. The said plastic surface plate 11 is single-structure or plural-structure vacuum molded or extruded directly, and the thickness of the plastic plate is between 0.3mm to 4mm, i.e. use the material such as ABS, PP, PS to make a single layer or use PMMA+PS, PC+PS to make co-extruded multi-layer. By the using of the co-extrusion, it can improve the hardness, wearing resistance, weather resistance and widen the using field of the products without increasing too much cost. The top surface of the plastic surface plate 11 can be formed to a plane surface, or to optional curved surface that the vacuum forming and the injection forming can achieve, thus to make the various shape of the products and widen the field of the product. The top surfaces of the plastic surface plate 11 can has printing textures or printing patterns, or has composite film layer containing textures or patterns, e.g. the corresponding surfaces of the plastic surface plate can produce various nature colors such as wood grains or marbles by means of printing, they also can has composite film layer containing nature colors such as wood grains or marbles; the top surface of the plastic surface plates can also has textures or patterns produced by transfer films, e.g. the transfer films with natural colors such as various wood grains or marbles, after transferring, the film is removed, then spray heat curing or UV-curing materials to form a layer to add the rigidity and weatherability of the table surface.

The chair board of the present invention, the injection molded piece can be formed by extruding directly or consisted of plural injection molded pieces. The plural injection molded pieces can decrease the size of the pieces so that the cost of the machines and molds can be decrease; the injection pieces can have various forms and have high-precision, and internally embedded reinforcement of ribs can be used to enhance strength of the composite board after welding.

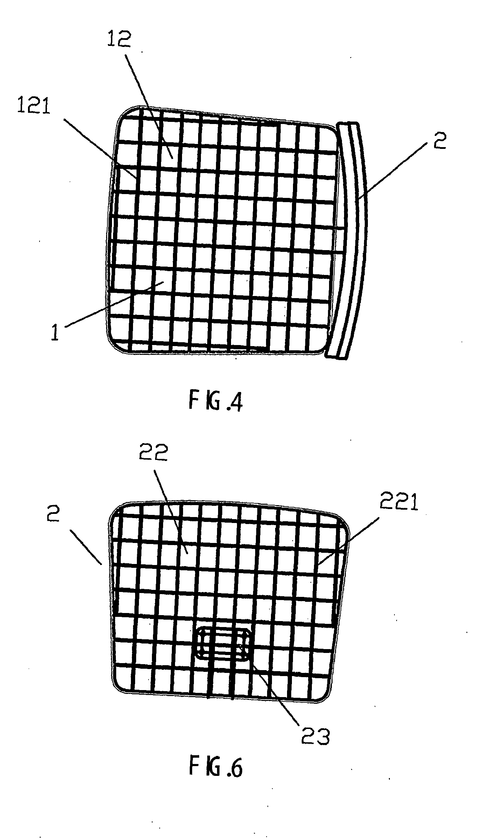

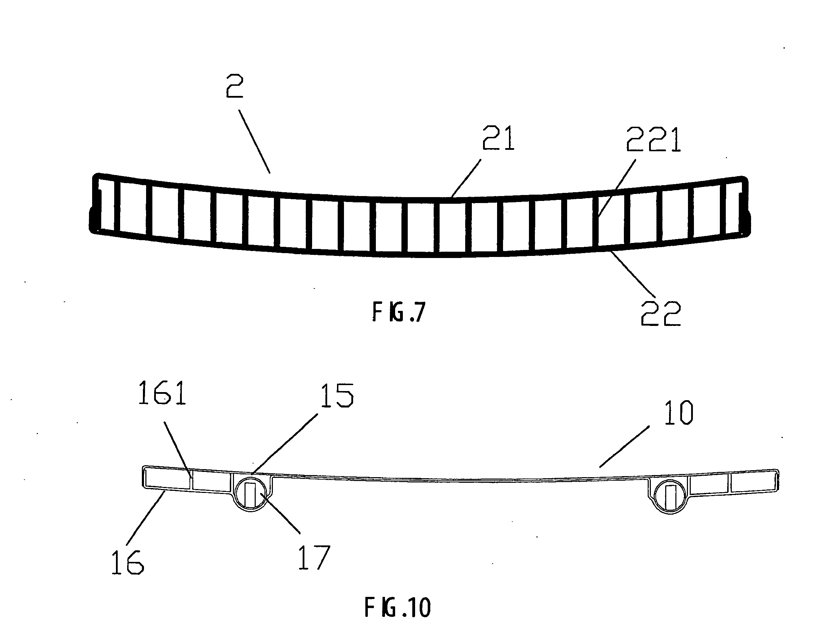

Referring to FIG 6 and FIG 7, the chair back 2 comprises plastic surface plate 21, injection molded piece 22, internally embedded reinforcement 23, some emboss ribs 221 formed by injection molding arranged on the upper portion of the injection molded piece 22, small stripes (not shown in the figures) are arranged at the contact position between the top surface of the ribs 221 and the bottom surface of plastic surface plate 21, which can be melted to bind the plastic surface plate 21 and the injection molded piece 22 during ultrasonic welding; the plastic surface plate 21 is a curve surface, the internally embedded reinforcement 23 used for connecting with the bracket 3.

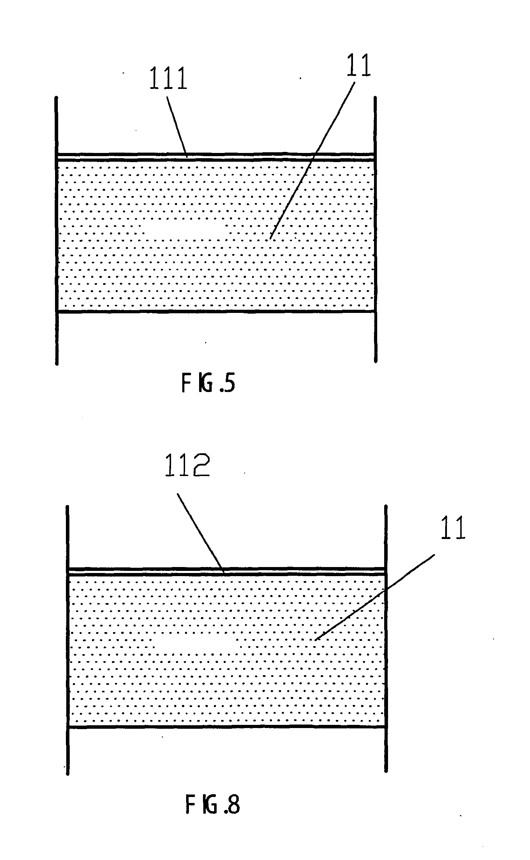

Embodiment 2. Referring to FIG.8, the plastic composite board with ultrasonic welded structure of the present invention is used in chair, The difference of this embodiment to embodiment 1 is that the surface of the surface plate has printing layer 112, the printing layer 112 is the printing textures or patterns printed on the surface of the surface plate directly.

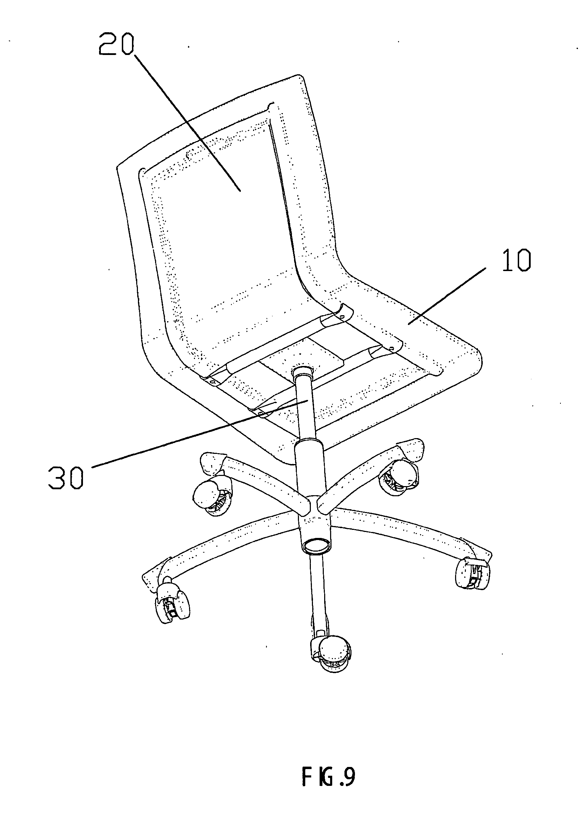

Embodiment 3. Referring to FIG.9 to FIG 10, the plastic composite board with ultrasonic welded structure of the present invention is used in chair, FIG 9 shows another structural view of the chair, the chair comprises a bracket 30, chair board 10 and chair back 20 mounted on the bracket 30, the chair board 10 and chair back 20 are an integrated construction, and is a plastic composite board with ultrasonic welded structure.

Herein the chair board 10 includes plastic surface plate 15, injection molded piece 16 and internally embedded reinforcement 17, the plastic surface plate 15 is a single structure has certain shape formed by extruding directly or vacuum molded after extrusion, and having top surface and bottom surface; there are multiple injection-molded piece 16 designed corresponding to the plastic surface plate 15, the upper portion of the two sides of the injection-molded piece 16 has several protruding upwardly net ribs 161, the top of the net ribs 161 has small protuberant points or stripes (not shown in the figures); the connection between the plastic surface plate 15 and the multiple injection molded piece 16 is by ultrasonic welding, the small stripes or protuberant points arranged on the top of the ribs 161 will be melted in the contact position between plastic surface plate 15 and injection molded piece 16, and bind the plastic surface plate 15 and the injection molded piece 16 together. The internally embedded reinforcement 17 is two separated pipes arranged between the plastic surface plate 15 and the injection molded piece 16, which not only enhance the strength of the chair board 10, but also connect to the bracket 30.

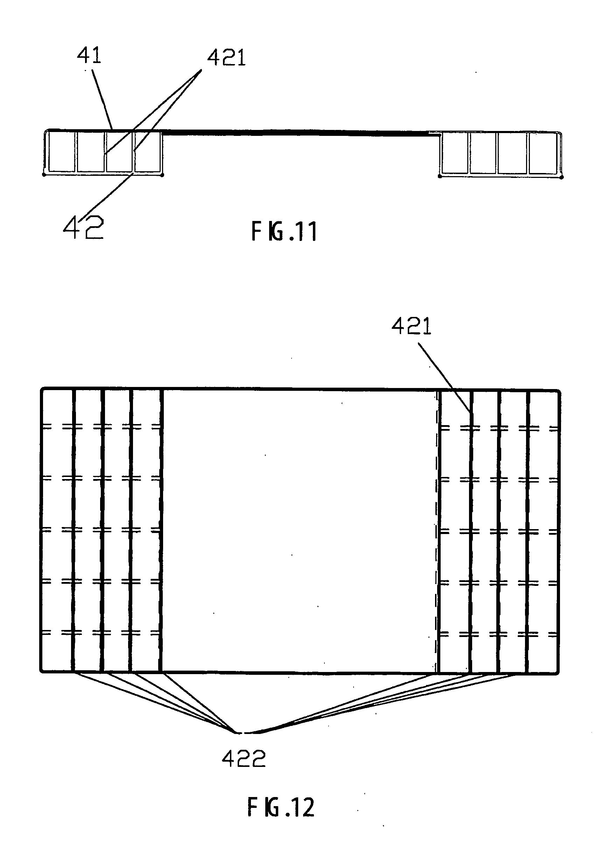

Embodiment 4. Referring to FIG.11 and FIG 12, the plastic composite board with ultrasonic welded structure of the present invention includes plastic surface plate 41 and injection molded piece 42, the plastic surface plate 41 is a single structure has certain shape formed by extruding directly or vacuum molded after extrusion, and having top surface and bottom surface; the upper portion of the two sides of the injection-molded piece 42 has several protruding upwardly net ribs 421, the top of the net ribs 421 has small stripes 422 which will be melted in the contact position between plastic surface plate 41 and injection molded piece 42, and bind the plastic surface plate 41 and the injection molded piece 42 together.

The periphery of the plastic surface plate 41 is connected with the corresponding periphery of the injection molded piece 42, the bottom surface of the plastic surface plate 41 bond with the corresponding stripes 421 of the injection molded piece by ultrasonic welding.

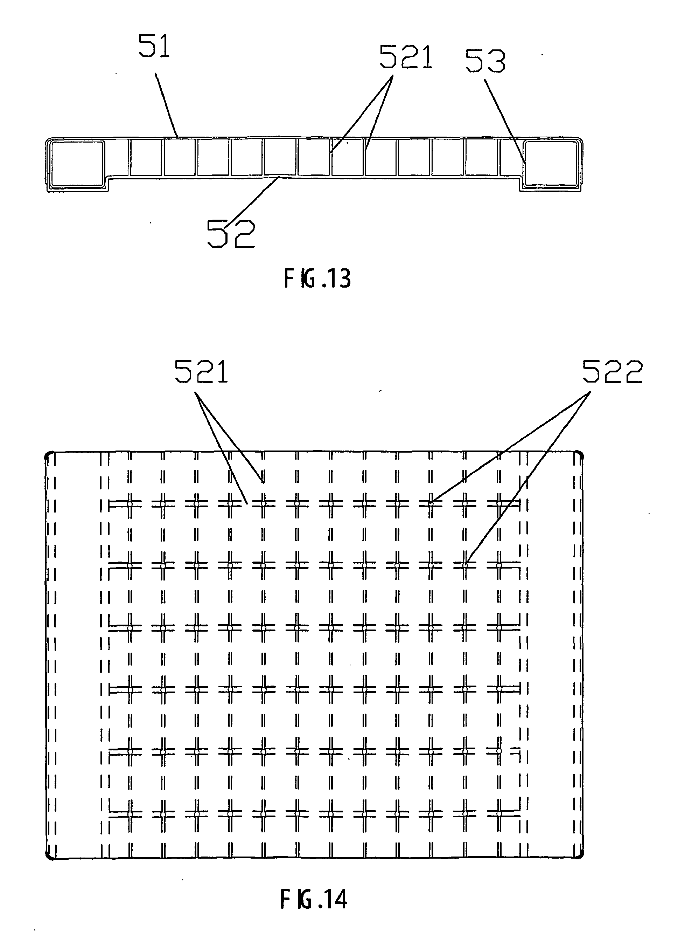

Embodiment 5. Referring to FIG 13 and FIG 14, the plastic composite board with ultrasonic welded structure of the present invention comprises plastic surface plate 51 and injection molded piece 52, some emboss ribs 521 formed by injection molding arranged on the upper portion of the injection molded piece 52, small stripes protuberant points 522 are arranged at the contact position between the top surface of the ribs 521 and the bottom surface of plastic surface plate 21, which can be melted to bind the plastic surface plate 51 and the injection molded piece 52 during ultrasonic welding; and the internally embedded reinforcement 53 arranged between the plastic surface plate 51 and injection molded piece 52, the internally embedded reinforcement 53 is two separated frames consisted by pipe fittings, certainly it can also consisted by profiles, and internally embedded reinforcement 53 mounted on the two sides of the composite board. The small protuberant points on the top of the ribs 521 will be melted between the plastic surface plate 51 and injection molded piece 52 by welding to bond the plastic surface plate 51 and injection molded piece 52 together, thus form the composite board.

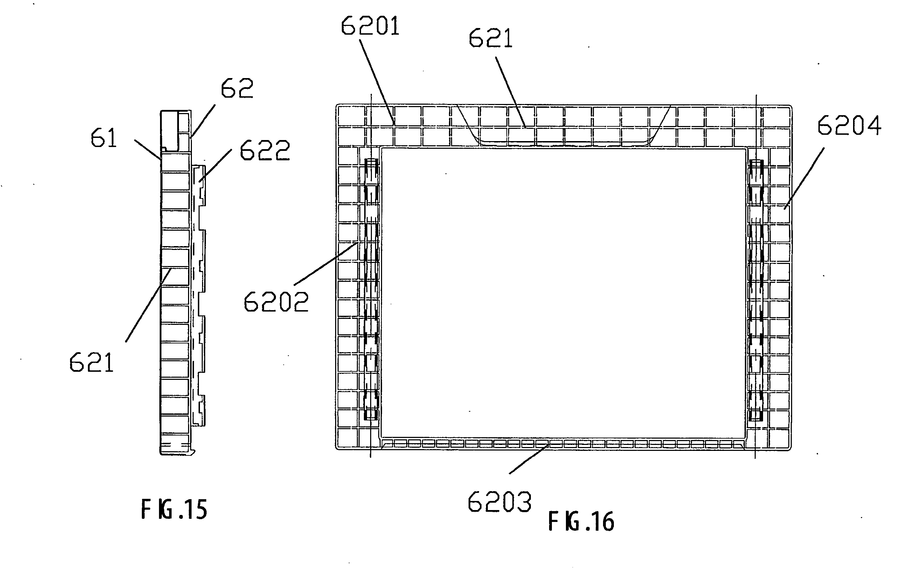

Embodiment 6. Referring to FIG.15 and FIG 16, the plastic composite board with ultrasonic welded structure of the present invention comprises plastic surface plate 61 and injection molded piece 62, some emboss ribs 621 formed by injection molding arranged on the upper portion of the injection molded piece 62, small stripes protuberant points or stripes (not shown in the figures) are arranged at the contact position between the top surface of the ribs 621 and the bottom surface of plastic surface plate 61, which can be melted to bind the plastic surface plate 61 and the injection molded piece 62 during ultrasonic welding; the small protuberant points on the top of the ribs 621 will be melted between the plastic surface plate 61 and injection molded piece 62 by welding to bind the plastic surface plate 61 and injection molded piece 62, thus form the composite board.

In this structure, the injection molded piece 62 is consisted of four injection-molded single structure 6201, 6202, 6203 and 6204, they enclosed to a frame to form the injection molded pieces 62, so the injection molded pieces 62 adhere onto part of the bottom surface of the plastic surface board, thus the injection molded pieces 62 can has smaller size to decrease the cost of machine and mold.

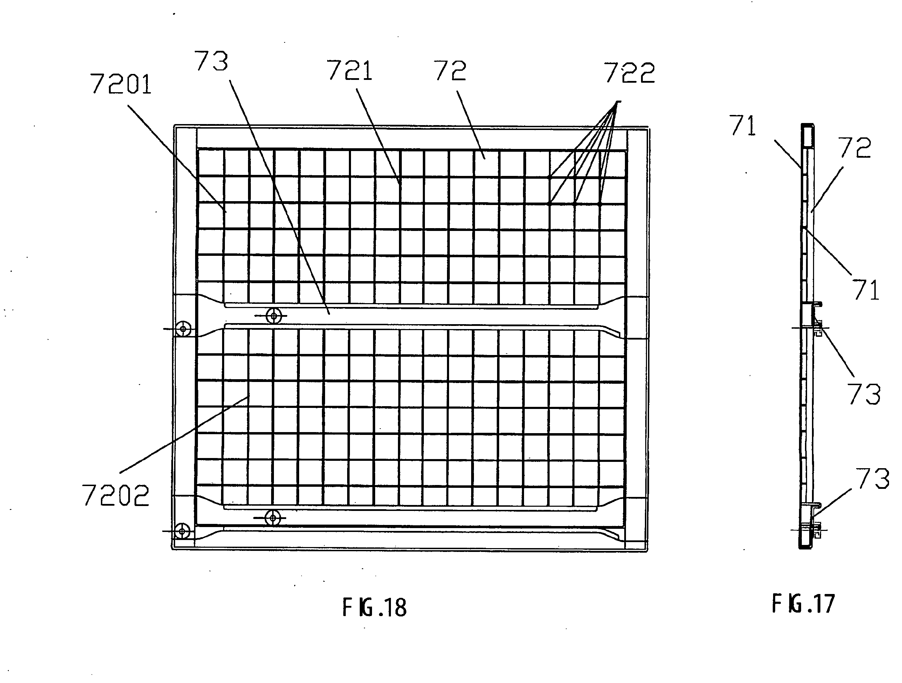

Embodiment 7. Referring to FIG.17 and FIG.18, the plastic composite board with ultrasonic welded structure of the present invention comprises plastic surface plate 71, injection molded piece 72 and internally embedded reinforcement 73, the internally embedded reinforcement 73 is separated II-shape frame formed by pipe fittings or profiles, and the internally embedded reinforcement 73 is mounted between the plastic surface plate 71, injection molded piece 72, some emboss ribs 721 formed by injection molding arranged on the upper portion of the injection molded piece 72, small stripes protuberant points 722 are arranged at the contact position between the top surface of the ribs 721 and the bottom surface of plastic surface plate 71, which can be melted to bind the plastic surface plate 71 and the injection molded piece 72 during ultrasonic welding; thus form the composite board.

In this structure, the injection molded piece 72 is consisted of two injection-molded single structure 7201, 7202, they adhere onto all the area of the bottom surface of the plastic surface board, thus the injection molded pieces 72 can has smaller size to decrease the cost of machine and mold as well.

### INDUSTRY UTILITY

The Different advantages of the plastic molding are used in the present invention to form the plastic composite board with ultrasonic welded structure, it comprises the plastic surface plate and the injection-molded piece, the surface plate is extruded directly or vacuum-molded after extrusion, the injection molded piece can be formed by extruding directly or consisted of plural injection molded pieces. the plastic surface plate and the injection-molded piece are welded together at the contact position by ultrasonic welding. The present invention is easy to manufactured and fit for industry,

## Claims

1. A plastic composite board with ultrasonic welded structure comprising :
A plastic surface plate, which is a single-structure extruded directly or vacuum-molded after extrusion, and having top surface and bottom surface;
An injection-molded piece, which is one or plural single-structure extruded directly and having the corresponding structure to the plastic surface plate, small protuberant points or stripes are arranged at the contact position between the injection molded piece and the bottom surface of plastic surface plate, which can be melted to bind the plastic surface plate and the injection molded piece during ultrasonic welding;
The periphery of the plastic surface plate is connected with the corresponding periphery of the injection molded piece, the bottom surface of the plastic surface plate bond with the corresponding protuberant points or stripes of the injection molded piece by ultrasonic welding.

2. The plastic composite board with ultrasonic welded structure according to claim 1, wherein the said injection molded piece is a single structure extruded directly, the injection molded piece attached on the full area of the bottom surface of the plastic surface board or only part area of the bottom surface of the plastic surface board.

3. The plastic composite board with ultrasonic welded structure according to claim 1, wherein the said injection molded piece is consisted of plural single structures of injection molded after extrusion, the injection molded piece attached on the full area of the bottom surface of the plastic surface board or only part area of the bottom surface of the plastic surface board.

4. The plastic composite board with ultrasonic welded structure according to claim 2 or 3, wherein some ribs with some emboss formed by injection-molding arranged on the upper portion of the said injection molded piece, small protuberant points or stripes are arranged at the contact position between the top surface of the stripes and the bottom surface of plastic surface plate, which can be melted to bind the plastic surface plate and the injection molded piece during ultrasonic welding.

5. The plastic composite board with ultrasonic welded structure according to claim 1, wherein the said plastic surface plate is single-structure or plural-structure vacuum molded or extruded directly, the top surface of the said plastic surface plate is a plane surface or curved surface.

6. The plastic composite board with ultrasonic welded structure according to claim 1, wherein the top surface of the said plastic surface plate has printing textures or printing patterns; or textures or patterns generated by transfer films, and there are heat curing or UV-curing materials sprayed on the textures or patterns.

7. The plastic composite board with ultrasonic welded structure according to claim 1, wherein the top surface of the said plastic surface plate has composite film layer containing textures or patterns.

8. The plastic composite board with ultrasonic welded structure according to claim 1, wherein the periphery superposition of the injection molded piece and the surface plate of the said plastic composite board jointed together by welding or glue.

9. The plastic composite board with ultrasonic welded structure according to claim 1, wherein there are internally embedded reinforcements placed between the said plastic surface plate and the injection molded piece, the said internally embedded reinforcement comprises closed frame made by pipe fittings or profiles, or comprises U-shape frame and reinforcement embedded in the corners of the composite board; the said reinforcement embedded in the corner is hardware or plastic parts.

10. The plastic composite board with ultrasonic welded structure according to claim 1, wherein there are internally embedded reinforcements placed between the said plastic surface plate and the injection molded piece, the said internally embedded reinforcement is separated hardware or pipe fittings; or two separated frames or II-shape frames or H-shaped frames made by pipe fittings or profiles.

11. The plastic composite board with ultrasonic welded structure according to claim 4, wherein the said plastic surface plate is a single structure or consisted of plural curve-surface plates extruded directly or vacuum-molded after extrusion, and there are injection molded pieces according to the shape of the curve-surface plates, the injection molded piece comprising bottom surface plate and ribs protruding upwardly, small protuberant points or stripes are arranged at the contact position between the top surface of the stripes and the bottom surface of plastic surface plate, which can be melted to bind the plastic surface plate and the injection molded piece during ultrasonic welding, the injection molded piece welded on the bottom surface of the curve-surface plate to form the seat board or back of the chair.

12. The plastic composite board with ultrasonic welded structure according to claim 11, wherein internally embedded reinforcements placed between the said plastic surface plate and the injection molded piece for the seat board or back to connect with the other parts.

13. The plastic composite board with ultrasonic welded structure according to claim 4, wherein the said plastic composite board is a chair board with integrated seat board and back, the said plastic surface plate is a single structure or consisted of plural curve-surface plates extruded directly or vacuum-molded after extrusion, and there are injection molded pieces according to the shape of the curve-surface plates, the injection molded piece comprising bottom surface plate and ribs protruding upwardly, small protuberant points or stripes are arranged at the contact position between the top surface of the stripes and the bottom surface of plastic surface plate, which can be melted to bind the plastic surface plate and the injection molded piece during ultrasonic welding, the injection molded piece welded on the bottom surface of the curve-surface plate to form the seat board or back of the chair.

14. The plastic composite board with ultrasonic welded structure according to claim 13, wherein internally embedded reinforcements placed between the said plastic surface plate and the injection molded piece, the internally embedded reinforcements are two pipes mounted on the two sides respectively.

15. The plastic composite board with ultrasonic welded structure according to claim 1, wherein the injection molded piece comprising bottom surface plate and ribs protruding upwardly, the protruding upwardly ribs forms a net structure.
